# EUROPÄISCHE PATENTSCHRIFT

(11) **EP 3 569 455 B1**
(45) Veröffentlichungstag und Bekanntmachung des Hinweises auf die Patenterteilung: **25.08.2021**
(21) Anmeldenummer: 19168821.7
(22) Anmeldetag: 12.04.2019
(51) Int. Cl.: B60R 25/24, G07C 9/00

(54) **ABWEHR EINES RELAYANGRIFFS**
DEFENCE AGAINST A RELAY ATTACK
PROTECTION CONTRE UN ATTAQUE PAR RELAIS

(30) Priorität: 17.05.2018 DE 102018207683
(43) Veröffentlichungstag der Anmeldung: 20.11.2019
(73) Patentinhaber: VOLKSWAGEN AKTIENGESELLSCHAFT, 38440 Wolfsburg (DE)
(72) Erfinder: Fricke, Christoph, 38118 Braunschweig (DE); Thiele, Andreas, 38442 Wolfsburg (DE); Nemetschek, Dominique, 38458 Velpke (DE)

(56) Entgegenhaltungen:
- WO-A1-2017/162315
- WO-A1-2017/220260
- DE-A1-102011 088 917
- US-A1- 2016 267 734
- US-B1- 9 892 293

## Beschreibung

Die vorliegende Erfindung betrifft die Abwehr eines Relaisangriffs, welcher auch als "Relay Station Attack" (RSA) bekannt ist und mit welchem ein Fahrzeug mit Keyless-Entry-System und/oder Keyless-Go-System unerlaubt sowohl entriegelt als auch gestartet werden kann.

Bei einer sogenannten Relay Station Attack wird das Fahrzeug entriegelt oder geöffnet, auch wenn sich der für das Fahrzeug berechtigte Schlüssel außerhalb der Reichweite des Fahrzeugs befindet. Dazu werden Funksignale über eine Relaisstation verlängert bzw. verstärkt, so dass quasi sowohl der Schlüssel als auch das Fahrzeug davon ausgehen, dass sie sich jeweils in der Reichweite des jeweils anderen befinden. Mit einer solchen Relay Station Attack können somit Fahrzeuge gestohlen werden.

Diese Relay Station Attacks existieren in verschiedenen Varianten. Bei der einfachsten Variante wird die Signalfeldstärke des von dem Fahrzeug ausgesendeten LF-Signals ("Low Frequency" (LF)) in Analogie eines Megaphons verstärkt. Diese einfache Variante versucht die Tatsache auszunutzen, dass die Reichweite des von dem Fahrzeug ausgesendeten LF-Signals in aller Regel geringer als die Reichweite des von dem Funkschlüssel bzw. ID-Gebers ausgesendeten UHF-Signals ist. Wenn sich das Fahrzeug innerhalb der Reichweite des von dem Funkschlüssel ausgestrahlten UHF-Signals befindet, kann dadurch das Fahrzeug gestohlen werden. Eine solche Situation tritt häufig in Wohngebieten auf.

Daher stellt sich die vorliegende Erfindung die Aufgabe, eine solche Realy Station Attack zu unterbinden.

Erfindungsgemäß wird diese Aufgabe durch ein Verfahren zum Ausführen einer Aktion für ein Fahrzeug nach Anspruch 1 und durch ein System nach Anspruch 6 gelöst. Die abhängigen Ansprüche definieren bevorzugte und vorteilhafte Ausführungsformen der vorliegenden Erfindung.

Im Rahmen der vorliegenden Erfindung wird ein Verfahren zum Ausführen einer Aktion für ein Fahrzeug (beispielsweise einem Entriegeln des Fahrzeugs oder zum Starten eines Motors des Fahrzeugs) bereitgestellt. Dieses erfindungsgemäße Verfahren umfasst folgende Schritte:
- Aussenden eines ersten Funksignals einer ersten Frequenz. Dieses erste Funksignal kann beispielsweise vom Fahrzeug automatisch ausgesendet werden, wenn das Fahrzeug eine Annäherung einer Person an das Fahrzeug erfasst oder wenn dem Fahrzeug ein bestimmter Befehl erteilt wird (z.B. wenn ein Knopf zum Starten des Motors gedrückt wird). Das erste Funksignal ist dabei insbesondere ein LF-Signal ("Low Frequency" (LF)). Der LF-Bereich hat zum Beispiel einen Frequenz niedriger als 300 kHz. Das LF-Signal hat zum Beispiel eine Frequenz von 134 kHz, 125 kHz oder 21 kHz.
- Abhängig oder in Reaktion auf das Aussenden des ersten Funksignals wird ein zweites Funksignal einer zweiten Funkfrequenz (ungleich der ersten Funkfrequenz) empfangen, wenn ein für das Fahrzeug berechtigter ID-Geber das erste Funksignal empfangen hat. Dieses zweite Funksignal ist in der Regel ein UHF-Signal ("Ultra High Frequency" (UHF)). Der UHF-Bereich hat zum Beispiel einen Frequenz höher als 200 MHz und niedriger als 3 GHz. , Das UHF-Signal weist zum Beispiel eine Frequenz von 434 MHz (868 MHz) in Europa und 315 MHz in Nordamerika auf. Bei dem zweiten Funksignal kann es sich auch um ein Bluetooth-Signal, ein WiFi-Signal, ein Ultrabreitband-Signal bzw. UWB-Signal oder irgendein anderes Funksignal handeln. Das zweite Funksignal wird insbesondere von dem für das Fahrzeug berechtigten ID-Geber ausgesendet, wenn oder sobald dieser ID-Geber oder Funkschlüssel das erste Funksignal empfängt. Dabei ist der ID-Geber in der Regel derart ausgestaltet sein, dass er das zweite Funksignal nur dann aussendet, wenn der ID-Geber anhand des empfangenen ersten Funksignals erkennt, dass das erste Funksignal von dem Fahrzeug ausgesendet wurde, für welches der ID-Geber berechtigt ist.
- Abhängig von dem empfangenen zweiten Funksignal wird die Aktion für das Fahrzeug ausgeführt. In diesem Schritt wird insbesondere durch eine entsprechende Auswertung des zweiten Funksignals überprüft, ob der das zweite Funksignal aussendende ID-Geber zur Ausführung der Aktion für das Fahrzeug berechtigt ist. Nur wenn anhand der Auswertung des zweiten Funksignals erkannt wird, dass der ID-Geber zur Ausführung der Aktion für das Fahrzeug berechtigt ist, wird die Aktion ausgeführt.
- Erfindungsgemäß wird in Reaktion oder abhängig von dem Aussenden des ersten Funksignals auch ein weiteres Funksignal der ersten Frequenz empfangen. Im Normalfall (ohne Relais Station Attack) entspricht dieses weitere Funksignal quasi dem (reflektierten) ersten Funksignal, welches von dem Fahrzeug selbst ausgesendet wurde.
- Quasi als weitere Bedingung (neben der oben beschriebenen Berechtigung des ID-Gebers) wird die Aktion für das Fahrzeug nur dann ausgeführt, wenn eine Signalstärke des weiteren Funksignals unterhalb einer vorbestimmten Signalstärkeschwelle liegt. Im anderen Fall (d.h. die Signalstärke des weiteren Funksignals ist gleich oder größer als die vorbestimmte Signalstärkeschwelle) wird die Antwort des ID-Gebers quasi ignoriert.

Durch das vorab beschriebene erfindungsgemäße Verfahren wird vorteilhafterweise eine Verstärkung des von dem Fahrzeug ausgesendeten ersten Funksignals (z.B. LF-Signals) erkannt und in diesem Fall die zugehörige Aktion für das Fahrzeug nicht ausgeführt. Bei einer Relais Station Attack, bei welcher das von dem Fahrzeug ausgesendete erste Funksignal (z.B. LF-Signal) verstärkt wird, erfasst das erfindungsgemäße Verfahren das weitere Funksignal (d.h. das überlagerte verstärkte erste Funksignal) mit einer erhöhten Signalstärke, welche oberhalb der vorbestimmten Signalstärkeschwelle liegt. Sobald aber das weitere Funksignal mit einer Signalstärke erfasst wird, welche oberhalb der vorbestimmten Signalstärkenschwelle liegt, wird die Aktion für das Fahrzeug vorteilhafterweise nicht ausgeführt, wodurch die Relais Station Attack abgewehrt wird.

Bei einer bevorzugten erfindungsgemäßen Ausführungsform wird das erste Funksignal mit einer vorbestimmten Signalstärke ausgesendet. Dabei ist die vorbestimmte Signalstärkenschwelle an diese vorbestimmte Signalstärke des ersten Funksignals angepasst. Je höher die Signalstärke, mit welcher das erste Funksignal abgestrahlt wird, desto höher ist auch die vorbestimmte Signalstärkenschwelle.

Durch den Vergleich der Signalstärke des empfangenen weiteren Funksignals mit der Signalstärkenschwelle wird überprüft, ob es sich bei dem empfangenen weiteren Funksignal um das (z.B. reflektierte) erste Funksignal handelt, welches das Fahrzeug selbst ausgesendet hat, oder ob es sich bei dem empfangenen weiteren Funksignal um das z.B. im Rahmen einer Relay Station Attack verstärkte erste Funksignal handelt. Daher ist es von Vorteil, wenn die Signalstärkenschwelle an die Signalstärke angepasst ist, mit der das erste Funksignal von dem Fahrzeug ausgesendet wird.

Im Rahmen der vorliegenden Erfindung wird auch ein System bereitgestellt, welches eine Steuerung und mindestens eine Antenne umfasst und welches durch ein Zusammenwirken der Steuerung mit der mindestens einen Antenne ausgestaltet ist, um ein erstes Funksignal einer ersten Frequenz auszusenden, um in Reaktion auf das Aussenden dieses ersten Funksignals ein zweites Funksignal einer zweiten Frequenz zu empfangen, und um abhängig von dem empfangenen zweiten Funksignal eine Aktion des Fahrzeugs auszuführen. Das erfindungsgemäße System ist darüber hinaus durch ein Zusammenwirken der Steuerung mit der mindestens einen Antenne ausgestaltet, um abhängig von dem Aussenden des ersten Funksignals ein weiteres Funksignal der ersten Frequenz zu empfangen und um die Aktion nur dann auszuführen, wenn eine Signalstärke des weiteren Funksignals unterhalb einer vorbestimmten Signalstärkenschwelle liegt.

Die Vorteile des erfindungsgemäßen Systems entsprechen im Wesentlichen den Vorteilen des erfindungsgemäßen Verfahrens, welche vorab im Detail ausgeführt sind, so dass hier auf eine Wiederholung verzichtet wird.

Die mindestens eine Antenne umfasst insbesondere mindestens eine erste Antenne, mindestens eine zweite Antenne und mindestens eine weitere Antenne. Die mindestens eine erste Antenne (insbesondere eine erste LF-Antenne) ist ausgestaltet, um das erste Funksignal auszusenden. Die mindestens eine zweite Antenne ist ausgestaltet, um das zweite Funksignal zu empfangen, so dass mit Hilfe der Steuerung abhängig von dem Aussenden des ersten Funksignals mittels der mindestens einen zweiten Antenne das zweite Funksignal empfangen wird. Die Steuerung ist ausgestaltet, um abhängig von dem empfangenen zweiten Funksignal die Aktion des Fahrzeugs durchzuführen. Die mindestens eine weitere Antenne (insbesondere eine oder mehrere zweite LF-Antennen) ist ausgestaltet, um das weitere Funksignal zu empfangen, so dass mit Hilfe der Steuerung abhängig von dem Aussenden des ersten Funksignals mit der mindestens einen weiteren Antenne das weitere Funksignal empfangen wird.

Gemäß einer erfindungsgemäßen Ausführungsform umfasst die mindestens eine erste Antenne mehrere erste Antennen. Dabei sind diese ersten Antennen sowohl zum Senden als auch zum Empfangen von Funksignalen der ersten Frequenz ausgestaltet. Darüber hinaus umfassen die ersten Antennen die mindestens eine weitere Antenne.

Gemäß dieser kostenoptimalen Ausführungsform kann das Fahrzeug beispielsweise über mehrere LF-Antennen verfügen. Das Aussenden des ersten Funksignals erfolgt dabei in der Regel nur über eine dieser LF-Antennen. Dementsprechend kann das Empfangen des weiteren Funksignals über die restlichen LF-Antennen stattfinden. Vorteilhafterweise wird bei dieser Ausführungsform keine zusätzliche Antenne zum Empfangen des weiteren Funksignals benötigt.

Erfindungsgemäß ist es allerdings auch möglich, dass die mindestens eine erste Antenne und die mindestens eine weitere Antenne unterschiedlich sind, d.h. keine Schnittmenge aufweisen (d.h. keine erste Antenne ist auch eine der weiteren Antennen).

Diese Ausführungsform ermöglicht, dass die mindestens eine weitere Antenne eine zum Empfang des weiteren Funksignals optimierte Antenne ist. Beispielsweise kann die mindestens eine weitere Antenne eine oder mehrere 3D-LF-Spulen umfassen, welche am Fahrzeug angebracht sind. Mit Hilfe einer solchen 3D-LF-Spule kann das weitere Funksignal besser erfasst werden, als mit der mindestens einen ersten Antenne, bei welcher es sich in der Regel um eine so genannte 1D-LF-Antenne handelt, welche nur eindimensional aussenden und empfangen kann. Bei einer ungünstigen Ausrichtung dieser (empfangenden) 1D-LF-Antennen kann ein Funksignal, welches von einer anderen (sendenden) dieser 1D-LF-Antennen als erstes Funksignal ausgesendet wird, nur unzureichend von den (empfangenden) 1D-LF-Antennen als weiteres Funksignal empfangen werden. Mit anderen Worten ermöglicht eine 3D-LF-Spule eine unabhängige Einkopplung der LF-Signale, was mit den normalen LF-Antennen nicht möglich ist.

Im Rahmen der vorliegenden Erfindung wird auch ein Fahrzeug bereitgestellt, welches ein erfindungsgemäßes System umfasst.

Die vorliegende Erfindung ist insbesondere zum Einsatz bei Kraftfahrzeugen mit einem Keyless Entry-System und/oder mit einem Keyless-Go-System geeignet. Prinzipiell lässt sich die vorliegende Erfindung allerdings auch bei Schiffen, Flugzeugen sowie bei gleisgebundenen oder spurgeführten Fahrzeugen einsetzen.

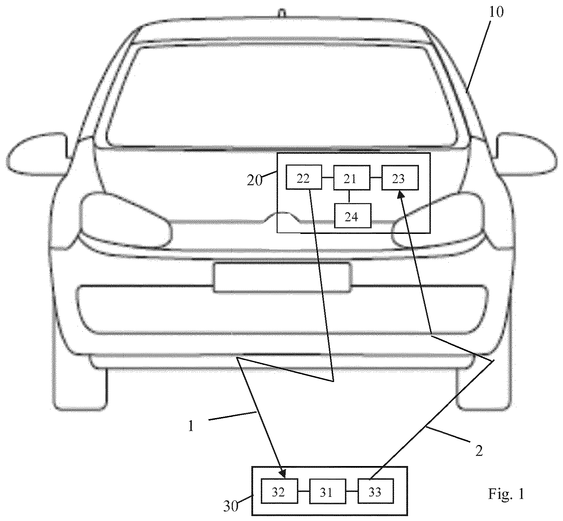

Im Folgenden wird die vorliegende Erfindung anhand bevorzugter erfindungsgemäßer Ausführungsformen mit Bezug zur einzigen Fig. im Detail beschrieben.

In der einzigen Fig. ist ein erfindungsgemäßes Fahrzeug zusammen mit einem für dieses Fahrzeug berechtigten ID-Geber dargestellt.

In der einzigen Fig. ist ein erfindungsgemäßes Fahrzeug 10, welches ein erfindungsgemäßes System 20 umfasst, zusammen mit einem ID-Geber 30 dargestellt, welcher für das dargestellte Fahrzeug 10 berechtigt ist.

Das System 20 umfasst neben einer Steuerung 21 eine LF-Antenne 22, eine UHF-Antenne 23 und eine weitere LF-Antenne 24. Der ID-Geber oder Funkschlüssel 30 umfasst neben einer Steuerung 31 eine LF-Antenne 32 und eine UHF-Antenne 33.

Im Folgenden wird beschrieben, wie es ohne einen Relaisangriff zur Ausführung einer Aktion für das Fahrzeug (in der Regel ein Entriegeln oder aber ein Starten des Motors des Fahrzeugs) kommt.

Nähert sich eine Person dem Fahrzeug 10, was beispielsweise durch einen (optischen) Sensor des Fahrzeugs 10 oder durch die Betätigung eines Türgriffs des Fahrzeugs 10 erfasst wird, sendet das System 20 mit Hilfe der Steuerung 21 und der LF-Antenne 22 ein LF-Funksignal 1 aus. In der Regel wird dabei das LF-Funksignal 1 mittels einer LF-Antenne ausgesendet, welche sich in der Nähe der Stelle befindet, an welcher sich die Person dem Fahrzeug nähert, damit in der Nähe dieser Stelle nach einem für das Fahrzeug 10 berechtigten ID-Geber gesucht wird.

Sobald der für das Fahrzeug 10 berechtigte ID-Geber 30 mit seiner LF-Antenne 32 das LF-Funksignal 1 erfasst, wird dieses LF-Funksignal 1 mit Hilfe der Steuerung 31 ausgewertet. Falls der ID-Geber 30 erkennt, dass das LF-Funksignal 1 zu dem ihm zugeordneten Fahrzeug 10 gehört, sendet der ID-Geber 30 mit Hilfe der Steuerung und seiner UHF-Antenne 33 ein UHF-Funksignal 2 aus. Dieses UHF-Funksignal 2 umfasst einen entsprechenden Code, anhand welchem das Fahrzeug 10 erkennen kann, dass der ID-Geber 30 für das Fahrzeug 10 berechtigt ist.

Das System 20 erfasst mit seiner UHF-Antenne 23 das von dem ID-Geber 30 automatisch in Reaktion auf das empfangene LF-Funksignal 1 ausgesendete UHF-Signal 2. Eine Auswertung dieses UHF-Funksignals 2 mittels der Steuerung 21 ergibt, dass der ID-Geber 30 für das Fahrzeug 10 berechtigt ist. Daher initiiert die Steuerung 21 eine entsprechende Aktion für das Fahrzeug 10, welche im Fall einer erfassten Annäherung einer Person (wie es vorab beschrieben ist) eine Entriegelung des Fahrzeugs 10 ist.

Bei einem Relaisangriff oder Relais Station Attack nähert sich beispielsweise ein Dieb dem Fahrzeug 10. In gleicher Weise, wie es vorab beschrieben ist, erfasst das Fahrzeug 10 die Annäherung des Diebes und sendet das LF-Funksignal 1 aus. Dieses LF-Funksignal 1 wird mit einer Vorrichtung, welche der Dieb beispielsweise bei sich trägt, empfangen und verstärkt ausgegeben. Dadurch wird die Reichweite des LF-Funksignals 1 vergrößert.

Wenn sich nun innerhalb der vergrößerten Reichweite des verstärkten LF-Funksignals 1 ein für das Fahrzeug 10 berechtigter ID-Geber 30 befindet, empfängt dieser ID-Geber 30 das verstärkte LF-Funksignal 1 und sendet seinerseits ein UHF-Signal 2 aus (in derselben Weise, wie es vorab beschrieben ist). Der Relaisangriff nutzt die Tatsache aus, dass die Reichweite des von einem ID-Geber 30 ausgesendeten UHF-Funksignals 2 deutlich größer als die Reichweite des mittels seiner LF-Antenne 22 vom Fahrzeug 10 ausgesendeten LF-Funksignals ist. Ohne Verstärkung dieses LF-Funksignals 1 würde nur dann ein in Reaktion auf dieses LF-Funksignal 1 ausgesendetes UHF-Signal 2 ausgesendet werden, wenn sich der entsprechende ID-Geber 30 in unmittelbarer Nähe des entsprechenden Fahrzeugs 10 befindet. Durch die Verstärkung des LF-Funksignals 1 im Rahmen des Relaisangriffs werden auch ID-Geber 30 angesprochen, ihrerseits ein UHF-Funksignal 2 auszusenden, welche sich in einer Entfernung vom Fahrzeug befinden, welche deutlich größer als die Reichweite des von dem Fahrzeug 10 ausgesendeten LF-Funksignals 1 ist. Dadurch kann der Dieb eine Entriegelung des Fahrzeugs 10 bewirken, auch wenn sich der berechtigte ID-Geber 30 nicht in seinem Besitz, sondern beispielsweise in einem Haus in der Nähe des Fahrzeugs 10 befindet.

Um einen solchen Relaisangriff abzuwehren, existiert erfindungsgemäß die weitere LF-Antenne 24. Das System 20 ist ausgestaltet, dass es in Reaktion auf ein Aussenden des LF-Funksignals 1 (z.B. während eines vorbestimmten Zeitintervalls, welches zum Zeitpunkt des Aussendens des LF-Funksignals beginnt) mit seiner weiteren LF-Antenne 24 LF-Funksignale erfasst. Bei einem Relaisangriff, wie er vorab beschrieben ist, würde diese weitere LF-Antenne 24 ein LF-Funksignal erfassen, dessen Signalstärke größer ist, als wenn das von dem System 20 ausgesendete LF-Funksignal 1 nicht verstärkt wird. Erfindungsgemäß wird die Signalstärke eines LF-Funksignals, welches mit der weiteren LF-Antenne 24 erfasst wird, mit einer Signalstärkenschwelle verglichen. Die Aktion für das Fahrzeug 10 (beispielsweise das Entriegeln des Fahrzeugs 10) wird nur dann ausgeführt, wenn zum einen das von dem System 20 erfasste UHF-Signal 2 von einem berechtigten ID-Geber 30 stammt und wenn zum anderen die Signalstärke des mit der weiteren LF-Antenne 24 erfassten LF-Funksignals unterhalb der Signalstärkenschwelle liegt. Durch diesen Vergleich der Signalstärke mit der Signalstärkenschwelle wird vorteilhafterweise erkannt, ob das von dem System 20 selbst ausgesendete LF-Signal 1 (insbesondere im Rahmen eines Relaisangriffs) verstärkt wurde. Mit anderen Worten wird anhand dieses Vergleichs der Signalstärke mit der Signalstärkenschwelle erkannt, ob ein Relaisangriff vorliegt oder nicht, so dass vorteilhafterweise die Aktion für das Fahrzeug nur dann ausgeführt wird, wenn durch diesen Vergleich kein Relaisangriff erfasst wurde.

### Bezugszeichenliste

- 1: LF- Funksignal
- 2: UHF-Funksignal
- 10: Fahrzeug
- 20: System
- 21: Steuerung
- 22,24: LF-Antenne
- 23: UHF-Antenne
- 30: ID-Geber
- 31: Steuerung
- 32: LF-Antenne
- 33: UHF-Antenne

## Patentansprüche

1. Verfahren zum Ausführen einer Aktion für ein Fahrzeug (10), wobei das Verfahren folgende Schritte umfasst:
Aussenden mit einer ersten Antenne (22) eines ersten Funksignals (1) einer ersten Frequenz,
Empfangen eines zweiten Funksignals (2) einer zweiten Frequenz in Reaktion auf das Aussenden des ersten Funksignals (1), und
Ausführen der Aktion abhängig von dem empfangenen zweiten Funksignal (2),
**dadurch gekennzeichnet,**
**dass** abhängig von dem Aussenden des ersten Funksignals (1) mit einer weiteren Antenne (24) ein weiteres Funksignal der ersten Frequenz empfangen wird, und
**dass** die Aktion nur ausgeführt wird, wenn eine Signalstärke des weiteren Funksignals unterhalb einer vorbestimmten Signalstärkenschwelle liegt.

2. Verfahren nach Anspruch 1
**dadurch gekennzeichnet,**
**dass** das erste Funksignal (1) abhängig von einer Annäherung einer Person an das Fahrzeug (10) ausgesendet wird.

3. Verfahren nach Anspruch 1 oder 2,
**dadurch gekennzeichnet,**
**dass** das erste Funksignal (1) mit einer vorbestimmten Signalstärke ausgesendet wird, dass die vorbestimmte Signalstärkenschwelle abhängig von der Signalstärke gewählt wird.

4. Verfahren nach einem der vorhergehenden Ansprüche,
**dadurch gekennzeichnet,**
**dass** das erste Funksignal ein LF-Signal (1) ist, und/oder
**dass** das zweite Funksignal ein UHF-Signal (2) eines ID-Gebers (30) für das Fahrzeug (10) ist.

5. Verfahren nach einem der vorhergehenden Ansprüche,
**dadurch gekennzeichnet,**
**dass** die Aktion ein Entriegeln des Fahrzeugs (10) und/oder ein Starten eines Motors des Fahrzeugs (10) ist.

6. System, welches eine Steuerung (21) und mindestens eine Antenne (22, 23, 24) umfasst und welches im Zusammenspiel mit der Steuerung (21) und der ersten Antenne (22, 23, 24) ausgestaltet ist,
um ein erstes Funksignal (1) einer ersten Frequenz auszusenden,
um in Reaktion auf das Aussenden des ersten Funksignals (1) ein zweites Funksignal (2) einer zweiten Frequenz zu empfangen, und
um abhängig von dem empfangenen zweiten Funksignal (2) eine Aktion des Fahrzeugs (10) auszuführen,
**dadurch gekennzeichnet,**
**dass** das System (20) im Zusammenspiel mit der Steuerung (21) und der ersten Antenne (22, 23, 24) ausgestaltet ist,
um abhängig von dem Aussenden des ersten Funksignals (1) ein weiteres Funksignal der ersten Frequenz zu empfangen,
um die Aktion nur auszuführen, wenn eine Signalstärke des weiteren Funksignals unterhalb einer vorbestimmten Signalstärkenschwelle liegt
**dass** die mindestens eine Antenne mindestens eine erste Antenne (22), mindestens eine zweite Antenne (23) und mindestens eine weitere Antenne (24) umfasst,
**dass** die mindestens eine erste Antenne (22) ausgestaltet ist, um das erste Funksignal (1) auszusenden,
**dass** die mindestens eine zweite Antenne (23) ausgestaltet ist, um das zweite Funksignal (2) zu empfangen, und
**dass** die mindestens eine weitere Antenne (24) ausgestaltet ist, um das weitere Funksignal zu empfangen,

7. System nach Anspruch 6,
**dadurch gekennzeichnet,**
**dass** die mindestens eine erste Antenne mehrere erste Antennen umfasst,
**dass** die ersten Antennen zum Senden und Empfangen ausgestaltet sind, und
**dass** die mehreren ersten Antennen die mindestens eine weitere Antenne umfassen.

8. System nach Anspruch 6,
**dadurch gekennzeichnet,**
**dass** keine der mindestens einen weiteren Antenne eine der mindestens einen ersten Antenne ist.

9. System nach einem der Ansprüche 6-8,
**dadurch gekennzeichnet,**
**dass** das System (20) zur Durchführung des Verfahrens nach einem der Ansprüche 1-5 ausgestaltet ist.

## Claims

1. Method for performing an action for a vehicle (10), wherein the method comprises the following steps:
transmitting a first radio signal (1) at a first frequency with a first antenna (22),
receiving a second radio signal (2) at a second frequency in response to the transmission of the first radio signal (1), and
performing the action depending on the received second radio signal (2),
**characterized in that**
a further radio signal at the first frequency is received depending on the transmission of the first radio signal (1) with a further antenna (24), and
the action is performed only if a signal strength of the further radio signal lies below a predefined signal strength threshold.

2. Method according to Claim 1,
**characterized in that**
the first radio signal (1) is transmitted depending on an approach of a person to the vehicle (10).

3. Method according to Claim 1 or 2,
**characterized in that**
the first radio signal (1) is transmitted with a predefined signal strength, and
the predefined signal strength threshold is selected depending on the signal strength.

4. Method according to one of the preceding claims,
**characterized in that**
the first radio signal is an LF signal (1), and/or
the second radio signal is a UHF signal (2) of an ID transponder (30) for the vehicle (10).

5. Method according to one of the preceding claims,
**characterized in that**
the action is an unlocking of the vehicle (10) and/or a starting of an engine of the vehicle (10).

6. System which comprises a controller (21) and at least one antenna (22, 23, 24) and which is designed, through interaction with the controller (21) and the first antenna (22, 23, 24):
to transmit a first radio signal (1) at a first frequency, to receive a second radio signal (2) at a second frequency in response to the transmission of the first radio signal (1), and
to perform an action of the vehicle (10) depending on the received second radio signal (2),
**characterized in that**
the system (20) is designed, through interaction with the controller (21) and the first antenna (22, 23, 24):
to receive a further radio signal at the first frequency depending on the transmission of the first radio signal (1),
to perform the action only if a signal strength of the further radio signal lies below a predefined signal strength threshold,
the at least one antenna comprises at least one first antenna (22), at least one second antenna (23) and at least one further antenna (24).
the at least one first antenna (22) is designed to transmit the first radio signal (1),
the at least one second antenna (23) is designed to receive the second radio signal (2), and
the at least one further antenna (24) is designed to receive the further radio signal.

7. System according to Claim 6,
**characterized in that**
the at least one first antenna comprises a plurality of first antennas,
the first antennas are designed for transmission and reception, and
the plurality of first antennas comprise the at least one further antenna.

8. System according to Claim 6,
**characterized in that**
no antenna of the at least one further antennas is one of the at least one first antennas.

9. System according to one of Claims 6-8,
**characterized in that**
the system (20) is designed to carry out the method according to one of Claims 1-5.

## Revendications

1. Procédé pour exécuter une action pour un véhicule (10), le procédé comprenant les étapes suivantes :
émission, avec une première antenne (22), d'un premier signal radioélectrique (1) à une première fréquence,
réception d'un deuxième signal radioélectrique (2) à une deuxième fréquence en réaction à l'émission du premier signal radioélectrique (1), et
exécution de l'action en fonction du deuxième signal radioélectrique (2) reçu,
**caractérisé en ce que**
en fonction de l'émission du premier signal radioélectrique (1), un signal radioélectrique supplémentaire à la première fréquence est reçu avec une antenne supplémentaire (24) et
l'action n'est exécutée que si une intensité de signal du signal radioélectrique supplémentaire est inférieure à un seuil d'intensité de signal prédéterminé.

2. Procédé selon la revendication 1, **caractérisé en ce que** le premier signal radioélectrique (1) est émis en fonction d'une approche du véhicule (10) par une personne.

3. Procédé selon la revendication 1 ou 2, **caractérisé en ce que** le premier signal radioélectrique (1) est émis avec une intensité de signal prédéterminée, **en ce que** le seuil d'intensité de signal prédéterminé est choisi en fonction de l'intensité de signal.

4. Procédé selon l'une des revendications précédentes, **caractérisé en ce que** le premier signal radioélectrique est un signal BF (1) et/ou **en ce que** le deuxième signal radioélectrique est un signal UHF (2) d'un transmetteur d'ID (30) pour le véhicule (10).

5. Procédé selon l'une des revendications précédentes, **caractérisé en ce que** l'action est un déverrouillage du véhicule (10) et/ou un démarrage d'un moteur du véhicule (10) .

6. Système, lequel comporte une commande (21) et au moins une antenne (22, 23, 24) et lequel, en coopération avec la commande (21) et la première antenne (22, 23, 24), est configuré
pour émettre un premier signal radioélectrique (1) à une première fréquence,
pour recevoir un deuxième signal radioélectrique (2) à une deuxième fréquence en réaction à l'émission du premier signal radioélectrique (1), et
pour exécuter une action du véhicule (10) en fonction du deuxième signal radioélectrique (2) reçu,
**caractérisé en ce que**
le système (20), en coopération avec la commande (21) et la première antenne (22, 23, 24), est configuré pour recevoir un signal radioélectrique supplémentaire à la première fréquence en fonction de l'émission du premier signal radioélectrique (1),
pour n'exécuter l'action que si une intensité de signal du signal radioélectrique supplémentaire est inférieure à un seuil d'intensité de signal prédéterminé,
**en ce que** l'au moins une antenne comporte au moins une première antenne (22), au moins une deuxième antenne (23) et au moins une antenne supplémentaire (24),
**en ce que** l'au moins une première antenne (22) est configurée pour émettre le premier signal radioélectrique (1),
**en ce que** l'au moins une deuxième antenne (23) est configurée pour recevoir le deuxième signal radioélectrique (2), et
**en ce que** l'au moins une antenne supplémentaire (24) est configurée pour recevoir le signal radioélectrique supplémentaire.

7. Système selon la revendication 6, **caractérisé en ce que** l'au moins une première antenne comporte plusieurs premières antennes, **en ce que** les premières antennes sont configurées pour émettre et recevoir et **en ce que** les plusieurs premières antennes comportent l'au moins une antenne supplémentaire.

8. Système selon la revendication 6, **caractérisé en ce qu'**aucune de l'au moins une antenne supplémentaire n'est l'une de l'au moins une première antenne.

9. Système selon l'une des revendications 6 à 8, **caractérisé en ce que** le système (20) est configuré pour mettre en œuvre le procédé selon l'une des revendications 1 à 5.
